Europäisches Patentamt

European Patent Office

Office européen des brevets

(11) Publication number: **0 278 569**
**A2**

# (12) EUROPEAN PATENT APPLICATION

(21) Application number: 88200202.5

(51) Int. Cl.⁴: **B29C 47/86** , C08J 5/18

(22) Date of filing: 05.02.88

(30) Priority: 10.02.87 NL 8700305

(43) Date of publication of application:
17.08.88 Bulletin 88/33

(84) Designated Contracting States:
AT BE CH DE ES FR GB IT LI NL SE

(71) Applicant: STAMICARBON B.V.
Mijnweg 1
NL-6167 AC Geleen(NL)

(72) Inventor: Van der Molen, Theodorus Jacobus
Rott 27
NL-6294 NL Vaals(NL)

(54) **Process for the production of cast film from high-density polyethylene.**

(57) Process for the production of cast film from a polymer composition based on high-density polyethylene, the molten polymer composition being fed through a rectangular die by means of an extruder and subsequently being cooled and rolled up via one or more cooling rolls, the polymer melt being processed at a melt temperature below 220¤C, measured at the die opening.

EP 0 278 569 A2

# PROCESS FOR THE PRODUCTION OF CAST FILM FROM HIGH-DENSITY POLYETHYLENE

The invention relates to a process for the production of cast film from a polymer composition based on high-density polyethylene, the molten polymer composition being fed through a rectangular die by means of an extruder and subsequently being cooled and rolled up via one or more cooling rolls.

The polymer melt is usually processed at high temperatures. A temperature of 280¤C is not exceptional.

Cast film manufactured from high-density polyethylene is commonly used as packaging material. The main requirements to be met by the packaging material are high stiffness, good tensile strength and good water-vapour-barrier properties.

The aim of the present invention is to provide a process for the production of cast film from a polymer composition based on high-density polyethylene, resulting in a film with improved mechanical properties, in particular with improved stiffness, yield stress and tensile strength.

This aim is achieved by processing the molten polymer composition at a melt temperature of less than 220¤C, measured at the die opening. Processing under the conditions according to the invention surprisingly results in particular (monoaxial) orientation effects which improve the mechanical properties of the film with respect to the conventional processing techniques. The stiffness and tensile strength in particular increase. This effect is greater at melt temperatures below 200¤C at the die opening, in particular at temperatures below 180¤C. It is not recommended to apply temperatures lower than 140¤C, in view of the melting point of high-density polyethylene.

Polymer compositions suitable to be processed according to the invention generally contain at least 50 wt% polyethylene with a density of 940 kg/m³ or higher. Small amounts of comonomers may be incorporated in this polyethylene; however, this may not cause the density to drop below 940 kg/dm³. Therefore the polyethylene preferably contains at most 5 mole% of 1-alkene.

If so desired, the polyethylene may contain a small amount of polyunsaturated compounds, as described in NL-A 85.02747.

The high-density polyethylene may be mixed with other polymers, for example polyethylenes with densities below 940 kg/m³, or polypropylene. However, preferably there is at least 70 wt% of polyethylene, more in particular at least 85 wt%, based on the total polymer.

A pretreatment of the high-density polyethylene, which is usually available as granulate, may further improve the results. Irradiation of the granulate before it is introduced into the extruder improves stiffness, tensile strength and yield stress. This irradiation may be effected in the usual manner, for example with an electron beam or gamma-radiation. The intensity of the radiation may vary from 0.01 to 2 MRad, preferably from 0.05 to 1 MRad. The amount of time for which the polymer is subjected to irradiation depends on the intensity of the radiation. In the case of more intense radiation a shorter irradiation time will suffice, and vice versa. In general, the irradiation time varies from several msec to several sec, for example from 5 msec to 2 sec, in particular from 10 msec to 1 sec.

It is also possible to cause a small number of free radicals to react with the polyethylene for some time. This can be done with advantage with a peroxide and during the extrusion which in any case takes place in the processing of the polymer to form cast film. This process is described in, for example, US-A-4,603,173, the contents of which are included in the present patent.

In addition, various additives like stabilizers, lubricants, fillers, colourants, waxes, etc. may also be present. In processing an ethylene copolymer with one or more $C_3$-$C_{18}$ 1-alkenes, fluorine elastomers, for example, may be added to prevent or minimize melt fracture.

The quantity by weight of additives will usually not exceed 20% of the quantity by weight of polymer.

The melt index of these polymer compositions, determined according to ASTM D 1238, may have the usual values, for example between 1 and 100 dg/min. In view of the low processing temperature, it is, however, recommendable to choose a melt index of not less than 4 dg/min. The favourable effect of low temperature processing on the mechanical properties decreases at melt indices above 50 dg/min, and is most apparent at a melt index of at most 25 dg/min.

The advantage of the invention is that polymer compositions with a relatively high melt index can also be processed to form cast film with good mechanical properties.

Another advantage is that monoaxially oriented films are obtained without the need of additional equipment.

A further advantage is that a degree of stiffness is reached which is unattainable with the conventional processing techniques of the same polymer composition, the stiffness being related to the density.

Yet another advantage is that a considerable amount of energy is saved, because extrusion is effected at low temperatures - an advantage that is further increased by using polyethylene with a relatively high melt index.

Cast film is obtained by feeding a polymer melt through a rectangular die and subsequently cooling it and rolling it up via one or more cooling rolls. Die widths of 0.2 to 1.0 mm are commonly used in the processing of polyethylene to form cast film and such widths may also be applied in the process according to the invention. It is also possible to use greater die widths, for example of 1.5 or 5 mm, and to vary the geometry of the die. It has now been found that the mechanical properties of the film improve with die widths of at least 1.5 mm and at most 10 mm, in particular at most 5 mm.

These greater die widths combined with the low processing temperature result in even better mechanical properties, in particular in good stiffness and tensile strength.

After the polymer composition has left the die opening it is fed to one or more cooling rolls. The distance between the die opening and the first cooling roll, the so-called air gap, is of some influence on the properties of the flat film produced. The same applies to the temperature of the first cooling roll. An optimum setting of this equipment is part of the common knowledge of anyone skilled in the art.

A so-called air knife is also commonly used in the manufacturing process of cast film. It serves to improve the heat transfer from the film to the cooling roll and to prevent air bubble inclusions.

The air knife can also be used in a process according to the invention. It has been found that the position of the air knife with respect to the film to be cooled (for example the distance), as well as its setting (for instance the speed and temperature of the air) may affect the results of the process according to the invention. An air temperature of 25¤C or less is preferable. Putting the air knife in its optimum position and setting is easy for anyone skilled in the art.

A large range of different types of films can be manufactured with the process according to the invention. Multi-layer film as well as single-layer film can, for instance, be produced. It is also possible to manufacture thin (for example 1 - 100 micron) and thick film (for example 100 micron - 250 micron) as well as narrow (several millimetres) and wide (several metres) films. This also includes the so-called 'tapes'. The above process can be carried out with the usual machines with their usual possibilities, set in the manner indicated in the present invention.

The invention will now be elucidated with some examples.

Cast film was produced under the conditions indicated in the tables. The extruder used was a Schwabenthan with a screw diameter of 30 mm. The length of the rectangular die was 15 cm, the air gap 20 mm and the temperature of the cooling roll 15¤C. The temperature of the melt at the die opening was determined through infrared measurement or with a thermocouple. Of the film the following were determined:
the modulus of elasticity according to ASTM D 882 (ISO R 1184);
yield stress and tensile strength according to ISO R 527;
Table 1 shows the results obtained with polyethylene with a density of 962 kg/m3 (ASTM D 1505) and a melt index (ASTM D 1238 cond. E) of 11 dg/min. The results shown in Table 2 were obtained with the same polyethylene, however, after irradiation with 0.2 MRad electron beam for about 1 second.
M.D. = machine direction
T.D. = direction perpendicular to M.D. in the plane of the film.

## T A B L E  1

| | | | Ex. I | Ex. II | Ex. III | Comp. Ex. 1 | Comp. Ex. 2 |
|---|---|---|---|---|---|---|---|
| temp. of melt, | ¤C | | 153 | 177 | 204 | 229 | 251 |
| die width, | mm | | 2 | 2 | 2 | 2 | 2 |
| film thickness | micronm | | 25 | 25 | 25 | 25 | 25 |
| output | kg/hr | | 3 | 3 | 3 | 3 | 3 |
| air knife | ¤C | | 25 | 25 | 25 | 25 | 25 |
| Modulus of elasticity, | $N/mm^2$ | M.D. | 728 | 672 | 568 | 465 | 496 |
| | | T.D. | 891 | 902 | 845 | 686 | 749 |
| yield stress | $N/mm^2$ | M.D. | 29 | | | | 21 |
| stress at 25% elongation | $N/mm^2$ | M.D. | 27.5 | | | | 17.5 |
| stress at 50% elongation | $N/mm^2$ | M.D. | 26 | | | | 16 |
| tensile strength | $N/mm^2$ | M.D. | 36 | | | | 33 |
| elongation at break | % | M.D. | 589 | | | | 1109 |

## T A B L E 2

| | | Ex. IV | Ex. V | Ex. VI | Comp. Ex. 3 | Comp. Ex. 4 |
|---|---|---|---|---|---|---|
| temp. of melt, ¤C | | 153 | 177 | 204 | 229 | 256 |
| die width mm | | 2 | 2 | 2 | 2 | 2 |
| film thickness micronm | | 25 | 25 | 25 | 25 | 25 |
| output kg/hr | | 3 | 3 | 3 | 3 | 3 |
| air knife ¤C | | 25 | 25 | 25 | 25 | 25 |
| modulus of elasticity $N/mm^2$ | M.D. | 846 | 786 | 706 | 564 | 522 |
| | T.D. | 964 | 1025 | 944 | 781 | 774 |
| yield stress $N/mm^2$ | M.D. | 34 | | | | 23 |
| stress at 25% elongation $N/mm^2$ | M.D. | 31.5 | | | | 21.5 |
| stress at 50% elongation $N/mm^2$ | M.D. | 31 | | | | 19 |
| tensile strength $N/mm^2$ | M.D. | 43 | | | | 38 |
| elongation at break % | M.D. | 582 | | | | 1048 |

## Claims

1. Process for the production of cast film from a polymer composition based on high-density polyethylene, the molten polymer composition being fed through a rectangular die by means of an extruder and subsequently being cooled and rolled up via one or more cooling rolls, characterized in that the polymer melt is processed at a melt temperature below 220¤C, measured at the die opening.

2. Process according to claim 1, characterized in that the polymer composition is processed at a melt temperature below.200¤C, measured at the die opening.

3. Process according to claim 2, characterized in that the polymer composition is processed at a melt temperature below 180¤C, measured at the die opening.

4. Process according to any of claims 1-3, characterized in that a polymer composition with a melt index between 1 and 100 dg/min is used.

5. Process according to claim 4, characterized in that a polymer composition with a melt index between 4 and 50 dg/min is used.

6. Process according to claim 5, characterized in that a polymer composition with a melt index between 8 and 25 dg/min is used.

7. Process according to any one of claims 1-6, characterized in that a die width of at least 0.2 mm is used.

8. Process according to claim 7, characterized in that a die width of at least 1.5 mm and at most 10 mm is used.

9. Process according to any one of claims 1-8, characterized in that irradiated polyethylene is used.

10. Process according to any one of claims 1-8, characterized in that polyethylene treated with a compound producing free radicals is used.

11. Cast film, produced according to any one of claims 1-10, with a thickness of 1-100 micronm and a width of 1-500 mm.